## Europäisches Patentamt
## European Patent Office
## Office européen des brevets

(19)

(11) Veröffentlichungsnummer: **0 204 008**
**B1**

(12) # EUROPÄISCHE PATENTSCHRIFT

(45) Veröffentlichungstag der Patentschrift:
**20.07.88**

(51) Int. Cl.⁴: **G 06 F 15/74,** G 06 F 15/02

(21) Anmeldenummer: **85105966.7**

(22) Anmeldetag: **15.05.85**

(54) **Tragbares Datenerfassungsgerät.**

(43) Veröffentlichungstag der Anmeldung:
**10.12.86 Patentblatt 86/50**

(45) Bekanntmachung des Hinweises auf die Patenterteilung:
**20.07.88 Patentblatt 88/29**

(84) Benannte Vertragsstaaten:
**AT BE CH DE FR GB IT LI NL SE**

(56) Entgegenhaltungen:
**FR-A-1 574 784**
**GB-A-2 146 150**

(73) Patentinhaber: **Latschbacher, Kajetan,**
**Hauptstrasse 120, A-4484 Kronstorf (AT)**

(72) Erfinder: **Latschbacher, Kajetan, Hauptstrasse 120,**
**A-4484 Kronstorf (AT)**

(74) Vertreter: **Magenbauer, Rudolf, Dipl.- Ing.,**
**Patentanwälte Dipl.- Ing. Rudolf Magenbauer**
**Dipl.- Phys. Dr. Otto Reimold Hölderlinweg 58,**
**D-7300 Esslingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 204 008 B1

## Beschreibung

Die Erfindung betrifft ein tragbares Datenerfassungsgerät, insbesondere zur Eingabe von Abmessungen und Typenbezeichnung, mit einer Tastenfelder aufweisenden Eingabeeinheit zur Dateneingabe mit einer die eingegebenen Daten anzeigenden alphanumerischen Anzeigeeinheit, mit einem Speicher zum Abspeichern von Daten, und mit einer Anschlußeinrichtung (12), an der Peripheriegeräte wie Drucker, Diskettenspeicher od. dgl. und/oder serielle und parallele Datenübertragungseinrichtungen anschließbar sind:

In der Forst- und Holzwirtschaft werden beispielsweise bei der Bestandsaufnahme gefällter Raumstämme, bei der Lagerhaltung oder beim An- und Verkauf von Holz üblicherweise die Rundholzaufmaße bzw. -mengen aufgenommen bzw. erfaßt, um einen Überblick über den jeweiligen Holzbestand zu erhalten. Dabei ist erforderlich, daß die einzelnen Hölzer nach Länge und Durchmesser vermessen werden; gleichzeitig wird auch die Dicke einer evtl. vorhandenen Rinde bestimmt. Weiterhin wird insbesondere bei gemischtem Holzanfall die Holzart festgehalten. Ferner erfolgt eine Unterteilung in einzelne Sorten sowie eine Einteilung nach Güteklassen; letzter ist beispielsweise abhängig von der Geradheit des Holzwuchses, der Breite der Jahresringe oder vom Vorhandensein von Astansätzen. Weiter erfolgt eine Einteilung der Hölzer nach Stärkeklassen, die bei Rundhölzern durch die mittlere Dicke gegeben ist.

Die obigen Aufnahmekriterien der einzelnen Hölzer wurden bisher in tabellarischer Form festgehalten; die einzelnen Tabellen wurden von Hand bestimmt. Weitergehende Berechnungen, als da sind beispielsweise die Bestimmung der Kubatur unter Berücksichtigung eines Rindenabzuges oder die Ermittlung des Holzpreises unter Berücksichtigung der Holzart, Holzsorte, Güte- und Stärkeklasse, erfolgte unter Zuhilfenahme eines tragbaren Datenerfassungsgerätes der eingangs genannten Art, beispielsweise in Gestalt eines programmierbaren Taschenrechners. Diese Vorgehensweise ist jedoch mit erheblichen Nachteilen behaftet. So können sich bei der Eingabe einzelner Daten in das Datenerfassungsgerät Übertragungsfehler einschleichen, deren Ursache im fehlerhaften Ablesen der erstellten Tabellenwerte oder aber einfach in Tippfehlern bei der Eingabe in daß Datenerfassungsgerät zu finden sind. Zudem ist diesem Verfahren sehr mühsam und zeitaufwendig, zumal üblicherweise vor Ort, beispielsweise im Wald oder auf einem Holzplatz, nur ein Tabellenentwurf erstellt wird, der anschließend noch in Reinschriit zu übertragen ist. Weiterhin ist es auch sehr umständlich, im Anschluß an eine Grundholzaufnahme eventuelle Übersichtslisten, Preislisten oder Rechnungen zu erstellen, da dies alles manuell zu erfolgen hat.

Aus der GB-A-2 146 150 oder der korrespondierenden DE-A-3 432 511 ist zwar die automatische Erfassung von Daten bekannt, diese bezieht sich jedoch lediglich auf sehr kleine Abmessungen eines Teils und erfolgt mittels eines Mikrometers. Ein numerisches Tastenfeld zur Eingabe einer Vielzahl von Daten und die Verarbeitung dieser Daten sind bei dem bekannten Gerät nicht vorgesehen. Es ist daher nicht möglich, schon vorab an Ort und Stelle genauere Informationen und Übersichten der einge gebenen Daten zu erhalten, bevor eine exakte Auswertung an Peripheriegeräten erfolgt. Neben der automatischen Erfassung von Abmessungen ist keine weitere Datenerfassung möglich, so daß dieses Gerät beispielsweise nicht zur Aufnahme und Verarbeitung einer Vielzahl von Holzdaten geeignet ist, noch viel weniger zur Optimierung der vorgenommenen Eingaben.

Der Erfindung liegt daher die Aufgabe zugrunde, ein Datenerfassungsgerät der eingangs genannten Art zu schaffen, das bei handlichem, kompaktem sowie kostengünstigem Aufbau eine einfache, vielseitige und schnelle Aufnahme von Holzdaten an Ort und Stelle gestattet, wobei die aufgenommenen Daten aufgearbeitet und optimiert werden sollen.

Diese Aufgabe wird dadurch gelöst, daß das Datenerfassungsgerät zur Verwendung bei der Aufnahme von Rundholzaufmaßen bzw. -mengen ein erstes Tastenfeld zur Eingabe von Holzarten, ein zweites Tastenfeld zur Eingabe von Holzsorten und ein drittes Tastenfeld zur Eingabe von Güteklassen besitzt, wobei jede einzelne Taste der Tastenfelder genau einer Holzart, Holzsorte bzw. Güteklasse entspricht, daß es ein an sich bekanntes numerisches Tastenfeld wenigstens zur Eingabe von Abmessungen der aufzunehmenden Rundhölzer in eine Recheneinheit zur Verarbeitung eingegebener Daten besitzt und daß die Anzeigeeinheit auch die in der Recheneinheit erhaltenen Ausgabedaten, wie Stärkeklassen, Kubatur od. dgl. anzeigt.

Mit diesem Datenerfassungsgerät können in vorteilhafter Weise Holzarten, Holzsorten oder Güteklassen durch Betätigung jeweils einer einzigen Taste schnell und sicher eingegeben werden, wobei sich die Gefahr des Eingebens fehlerhafter Daten deutlich verringert. Auf ein manuelles Übertragen von Daten, das Ursache von Fehlern sein kann, kann vollständig verzichtet werden. Gesonderte Berechnungen, wie die Ermittlung der Stärkeklasse, Kubatur od. dgl. brauchen von der Bedienperson nicht mehr selbst durchgeführt werden, sondern erfolgen automatisch, so daß auch eine sehr einfache Bedienung erreicht wird. Über die Anzeigeeinheit kann jederzeit eine übersichtliche Kontrolle der aufgenommenen und verarbeiteten Daten erfolgen. Ein weiterer Vorteil besteht darin, daß sämtliche eingegebenen oder verarbeiteten Daten abgespeichert sind und über ein anschließbares Peripheriegerät abgerufen werden können. Eine nachträgliche Erstellung von Aufnahmelisten, Rechnungen od. dgl. ist damit schnell und fehlerfrei möglich, ohne daß eine manuelle Datenübertragung vorgenommen werden müßte.

Vorteilhafte Weiterbildungen des erfindungsgemäßen tragbaren Datenerfassungsgerätes sind in den Unteransprüchen aufgeführt.

Mit der Weiterbildung nach Anspruch 2 kann eine noch schnellere Eingabe von Daten erfolgen, wobei zusätzlich die Gefahr des Verwechselns einzelner Tasten ausgeschlossen ist. Gleichzeitig ist ein störungsfreies Arbeiten gewährleistet, da die kontaktlose Messdatenübertragung ein Kabelwirrwarr von vorne herein ausschließt.

Die Weiterbildung nach Anspruch 3 erweitert den Einsatzbereich des erfindungsgemäßen Gerätes.

Mit der Weiterbildung nach Anspruch 4 kann jedem vermaßten Rundholz eine Kennziffer zugeordnet werden, oder aber die bereits einem Rundholz verliehene Kennziffer (Blochnummer) kann eingegeben werden, so daß später eine einwandfreie Identifikation der einzelnen Aufnahmedaten möglich ist. Mit der Weiterbildung nach Anspruch 5 ist erreicht, daß sämtliche Eingabedaten und zumindest teilweise die Ausgabedaten so lange nebeneinander auf der Anzeigeeinrichtung erscheinen, bis die gemeinsame Abspeicherung erfolgt. Dadurch behält die Bedienperson jederzeit die Übersicht über die einer Blochnummer zugeordneten Aufnahmedaten, weiterhin erleichtert die blockweise Abspeicherung der Daten das spatere Übertragen derselben an Peripheriegeräte od dgl.

Die Weiterbildung nach Anspruch 6 läßt auch unabhängig vom eigentlichen Verwendungszweck des Datenerfassungsgerätes separate Rechenvorgänge zu.

Mit der Weiterbildung nach Anspruch 7 ist gewährleistet, daß das erfindungsgemäße Datenerfassungsgerät jeweils vor Ort unabhängig von den herrschenden Umweltbedingungen störungsfrei einsetzbar ist. Die empfindliche Elektronik ist hervorragend geschützt.

Die Weiterbildung nach Anspruch 8 erhöht den Bedienungskomfort des Datenerfassungsgerätes.

Die Weiterbildung nach Anspruch 9 erlaubt wahlweise eine Berechnung der Kubatur als Festmeter- oder als Raummeterberechnung. Dadurch können einzelne Baumstämme aber auch ganze Holzstapel erfaßt werden.

Durch die Weiterbildung nach Anspruch 10 können durch Tastendruck die Daten für Holzart, Holzsorten, Güteklasse und Länge eines Rundholzes oals "Modellstamm" abgespeichert werden. Die Daten des Modellstammes können über die Wahltaste beliebig oft auf die Anzeigeeinheit gebracht werden, so daß beim jeweils zu erfassenden Rundholz nur die abweichenden Daten zeitsparend eingegeben werden müssen.

Die Weiterbildung nach Anspruch 11 ermöglicht eine noch kompaktere Bauart des erfindungsgemäßen Gerätes ohne den Bedienungskomfort zu vernachlässigen.

Die Weiterbildung nach Anspruch 12 erleichtert zu jeder Zeit die Kontrolle auch bereits früher eingegebener Daten.

Mit der Weiterbildung nach Anspruch 13 erhöht sich der Bedienungskomfort und die Einsatzbreite des erfindungsgemäßen Gerätes, in dem durch Drücken einer der angewählten Holzart entsprechenden Taste diese automatisch mit der entsprechenden Rindenabzugstabelle für nachträgliche Berechnung des Rindenabzuges verbunden wird und weiter eine automatische Zuordnung zu den Holzsorten vornimmt. Das Drücken der Tasten für Holzsorten kann insbesondere eine Änderung der automatischen Sortenzuteilung bewirken.

Die Erfindung wird nachfolgend anhand beiliegender Zeichnung näher erläutert. Es zeigen:

Fig. 1 eine erste Bauform des erfindungsgemäßen Datenerfassungsgerätes in perspektivischer Darstellung,

Fig. 2 eine Draufsicht auf das Datenerfassungsgerät nach Fig 1 , wobei insbesondere die Eingabeeinheit und die Anzeigeeinheit gut sichtbar sind, und

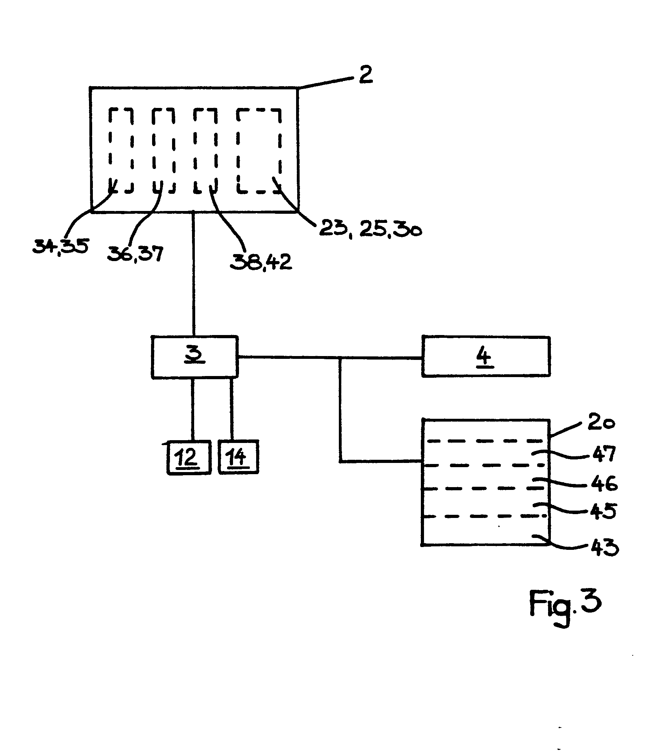

Fig. 3 den schematischen Aufbau des Gerätes nach den Fig. 1 und 2.

Das erfindungsgemäße tragbare Datenerfassungsgerät ist in einem im wesentlichen plattenförmigen, rechteckigen Kunststoffgehäuse 1 spritzwassergeschützt untergebracht und besitzt eine mehrere Tastenfelder aufweisende Eingabeeinheit 2 zur Dateneingabe, eine Rechnereinheit 3 zur Verarbeitung eingegebener Daten, eine die eingegebenen bzw. durch die Rechnereinheit bearbeiteten Daten anzeigende alphanumerische Anzeigeeinheit 4 und einen Speicher 20 zum Abspeichern von Daten.

Auf der plattenförmigen Oberseite 5 des erfindungsgemäßen Gerätes ist im Bereich einer der Breitseiten eine parallel zu dieser Seite verlaufende halbzylindrische und innen hohl ausgebildete Erhebung 6 angebracht, in deren Innerem, eine gestrichelt dargestellte, elektrische Versorgungseinheit 7 in Gestalt wiederaufladbarer Akkumulatorenbatterien untergebracht ist. Der übrige, wesentliche Teil der Oberseite 5 ist von der Eingabe- und der Anzeigeeinheit 2,4 beherrscht. Letztere besitzt ein langgestrecktes, rechteckiges Fenster 8, das im Bereich einer der Längsseiten 11 des Gehäuses parallel zu dieser verlaufend angeordnet ist. Zwischen dem Fenster 8 und der entgegengesetzten Längsseite 9 des Gehäuses befinden sich die Tasten 10 der Eingabeeinheit 2 in vorteilhafter, später noch zu erläutender Anordnung.

An der Längsseite 9 ist eine Anschlußeinrichtung 12 vorgesehen, die mehrere, flüssigkeitsdicht verschließbare Steckanschlüsse 13 besitzt, an denen Peripheriegeräte wie Drucker, Diskettenspeicher od.dgl., ein Versorgungsstecker zum Aufladen der elektrischen Versorgungseinheit 7 sowie serielle und parallele Datenübertragungseinrichtungen anschließbar sind (nicht dargestellt). In einer Seitenwand des Gehäuses 1 ist ein Fenster 15 vorgesehen, hinter dem eine schematisch und gestrichelt dargestellte Datenaufnahmeeinrichtung 14 einer Infrarotübertragungsstrecke angeordnet ist. Durch diese Aufnahmeeinrichtung kann eine kontaktlose Aufnahme von mittels Infrarotstrahlen übertragenen Meßdaten erfolgen, die beispielsweise von einem elektronischen Zusatzgerät ausgesandt werden. Letzteres kann vorzugsweise ein elektronisches Dickenmessgerät wie eine Messkluppe sein, mit der die Durchmesser von Baumstämmen mit hoher Maßgenauigkeit messbar sind.

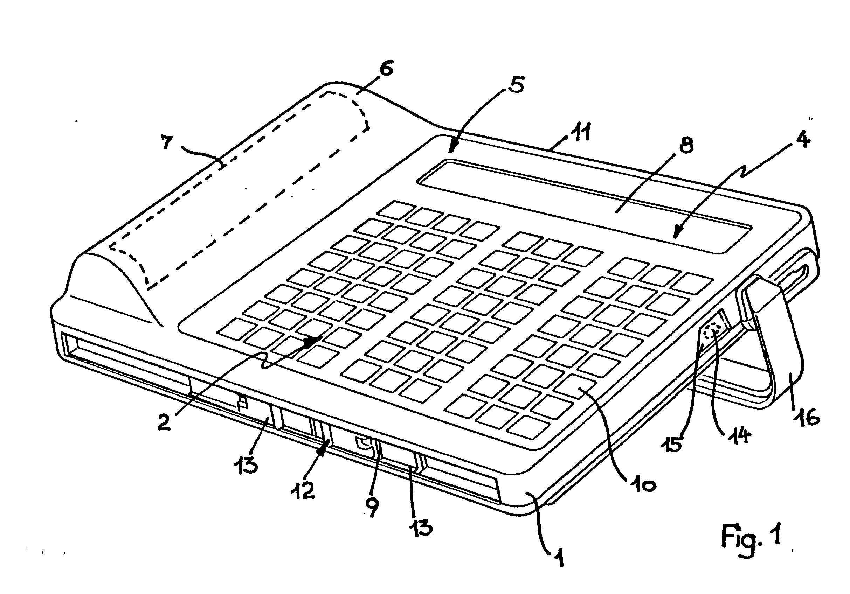

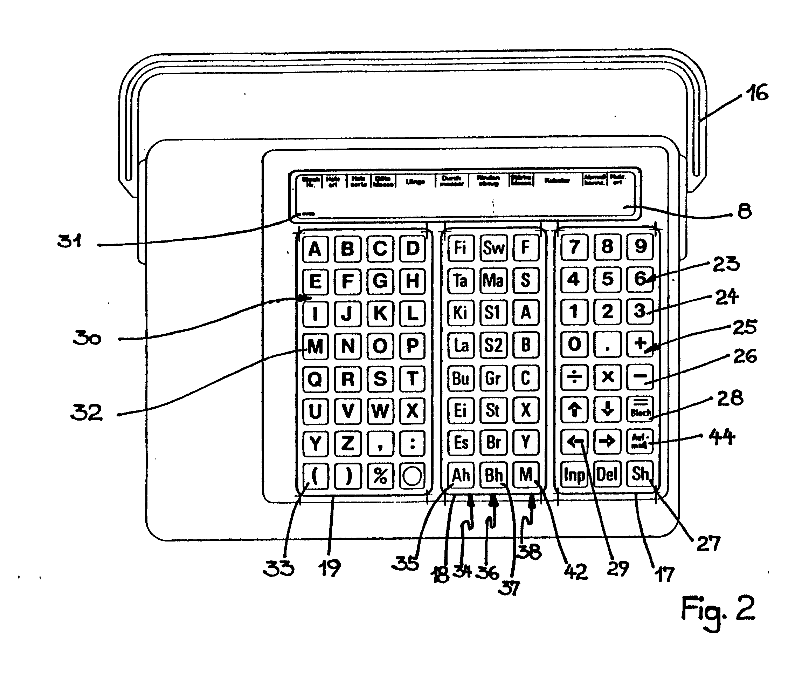

Das erfindungsgemäße Gerät besitzt einen am Gehäuse 1 schwenkbar festgelegten, U-förmigen Haltebügel 16, der mit seinen U-Schenkeln an den beiden Breitseiten des Gehäuses, im Nachbarbereich des Anzeigefensters 8, angelenkt ist. Der Haltegriff 16 kann in eine Transportstellung verbracht werden, in der die U-Ebene in der Plattenebene des Gehäuses 1 verläuft (Fig. 2), so daß das Gehäuse taschenartig tragbar ist. In einer In Fig. 1 dargestellten verschwenkten Stellung dient der Haltegriff 16 als Stütze für das Gehäuse 1, so daß dieses in einer Stellung abgestellt werden kann, in der die Oberseite 5 leicht schräg und in einem spitzen Winkel zu einer nicht dargestellten Auflagefläche verläuft, so daß die Eingabeeinheit gut bedienbar und die Anzeigeeinheit gut ablesbar ist.

Die Tasten 10 der Eingabeeinheit 2 sind zu drei leicht zueinander separierten Folientastenabschnitten 17, 18, 19 zusammengefasst, die jeweils mehrere, entsprechend ihrer Funktionsweise zusammengefasste Tastenfelder besitzen.

Nachfolgend soll sich eine nähere Erläuterung der Funktionsweise der Tasten der einzelnen Tastenfelder anschließen. Dabei wird als selbstverständlich vorausgesetzt, daß die Rechnereinheit 3 so programmiert ist, daß bei Betätigung der einzelnen Tasten die beschriebenen Funktionen auch ausgeführt werden.

Das erfindungsgemäße Datenerfassungsgerät ist insbesondere zur Verwendung bei der Aufnahme von Rundholzaufmaßen bzw. -mengen einsetzbar.

So dient der erste Folientastenabschnitt 17 der Ziffern und Befehlseingabe für den Rechner und enthält ein Zifferntasten 24 "0" bis "9" enthaltendes numerisches Tastenfeld 23. Über dieses lassen sich die Abmessungen der aufzunehmenden Rundhölzer eingeben. Weiter ist im Abschnitt 17 ein Rechenartentasten 26 besitzendes Tastenfeld 25 vorgesehen. Die Tasten 26 für die Rechenarten sind vorzugsweise eine Additions-, eine Subtraktions-, eine Multiplikations- und eine Divisionstaste. Diese Tasten ermöglichen einerseits einen Einsatz des erfindungsgemäßen Gerätes als handelsüblichen Taschenrechner, andererseits erfüllen diese Tasten jedoch auch noch weiter unten zu erläuternde Zusatzfunktionen.

In der untersten Reihe des Tastenabschnittes 17 sind drei Zusatztasten 27 vorhanden. Dabei dient die Taste

INP der Eingabe,
DEL dem Löschen oder der Korrektur und
Sh der Veränderung von Daten.

Mit Position 28 ist eine Wahltaste bezeichnet, mit deren Betätigung die einem Rundholz zugeordnete Blochnummer ($\hat{=}$ Nummer des Stammes) eingegeben werden kann. Bei der Lagerhaltung sowie beim Ein-und Verkauf von Holz, insbesondere Rundholz, ist es üblich, die einzelnen Hölzer durch aufgeschriebene, aufgeprägte oder auf eingeschlagenen Plättchen vorhandene Nummern oder Buchstaben, meist nach einem individuellen Code zu kennzeichnen. Dieser Code entspricht der Blochnummer; somit kann später eine eindeutige Zuordnung zwischen eingegebenen Daten und entsprechendem Rundholz erfolgen.

Die eingegebenen Daten, u.a. auch die Blochnummer, erscheinen im Fenster 8 der Anzeigeeinheit 4.

Soll eine Blochnummer neu eingegeben oder verändert werden, so kann dies auf üblichem Eingabewege oder aber einfacher über die mit Pfeilen versehenen Positioniertasten 29 erfolgen. Durch die mit waagrechten Pfeilen versehenen Positioniertasten kann ein auf der Anzeigeeinheit aufleuchtender Corsor 31 innerhalb der Anzeigezeile positioniert werden, eine Erhöhung oder Erniedrigung einer Ziffer der Blochnummer erfolgt durch Betätigung einer der mit senkrechten Pfeilen versehenen Positioniertasten.

Der Folientastenabschnitt 19 enthält ein Buchstaben-Tastenfeld 30 mit die einzelnen Buchstaben des Alphabets aufweisenden Buchstabentasten 32. Weiters mehrere Symboltasten 33. Das Buchstaben-Tastenfeld 30 dient insbesondere der Eingabe von Daten, die mit den übrigen Tasten der Eingabeeinheit 2 nicht erfassbar sind. Insbesondere kann unter ihrer Zuhilfenahme eine Programmierung der Rechnereinheit 3 erfolgen, um einen gewünschten Programmablauf zu erzielen.

Bevor nun auf den dritten Folienabschnitt 18 eingegangen wird, hier einige Vorbemerkungen: Wenn im folgenden von einem "Aufmaß" die Rede ist, so sollen damit sämtliche einer Blochnummer zugeordnete Daten gemeint sein. Bei der Aufnahme eines Rundholzes wird zunächst dessen Blochnummer eingegeben, anschließend erfolgt die Eingabe sämtlicher zu diesem Bloch gehörender Aufmaßdaten.

Der mittlere Folientastenabschnitt 18 besitzt drei Tastenfelder, die jeweils mehrere in Reihe nacheinander angeordnete Tasten besitzen. So ist zunächst ein Tastenfeld 34 zur Eingabe von Holzarten vorgesehen. Jede einzelne der Holzarten-Tasten 35 ist genau einer Holzart fest zugeordnet, wobei die einzelnen Tasten von oben nach unten folgenden Holzarten entsprechen: Fichte, Tanne, Kiefer, Lärche, Buche, Eiche, Esche und Ahorn.

Das zweite Tastenfeld 36 des Abschnittes 18 dient der Eingabe von Holzsorten; ebenfalls entspricht wieder jede Holzsorten-Taste 37 genau einer Holzsorte. Von oben nach unten gelesen sind dies: Schwellen, Masten, Faserholz I, Faserholz II, Grubenholz, Stangen, Brennholz und Behauholz.

Das dritte Tastenfeld 38 ist zur Eingabe von Güteklassen vorgesehen, jede einzelne der Güteklassen-Tasten 42 entspricht genau einer Güteklasse. Dabei wird unterschieden zwischen Funierholz, Schälholz, Güteklasse A, Güteklasse B, Güteklasse C, Güteklasse C+, Reinbloche und Manipulationsholz (von oben nach unten gelesen in der Tastenreihe).

Der Folientastenabschnitt 18 enthält die gängigen Einteilungen, sollten diesbezüglich zusätzliche Daten eingegeben werden, so kann dies unter Verwendung des Buchstaben-Tastenfeldes 30 erfolgen.

Bezüglich der Holzsorten sei nachgetragen, daß die Zuordnung zu den Holz sorten Langholz, Doppelbloche, Bloche und Kürzungsbloche automatisch erfolgt. Das Tastenfeld 36 dient für die übrigen gängigen Holzsorten.

Einige Holzsorten tragen keine laufenden Blochnummern (z. B. Pontelli), dort wird anstelle der Eingabe der Blochnummer die Leertaste "0" der Symboltasten 33 gedrückt. Eine Eingabe der Blochnummer erübrigt sich nun so lange, bis durch Drücken der funktionsmäßig doppelt belegten Additionstaste 25 wieder auf normale Blochnummern - Eingabe umgeschaltet wird. Ebenfalls ist durch Drücken der Additions- oder der Subtraktionstaste 25 eine Ausweitung der Eingabe von Güteklassen möglich.

Nachfolgend soll sich eine kurze Betriebsbeschreibung des erfindungsgemäßen Datenerfassungsgerätes anschließen:

Im Speicher 20 ist ein Programmspeicher 43 enthalten, in dem verschiedene Programmabläufe abspeicherbar sind. Die Aktivierung der einzelnen Programme erfolgt über Tasten der Eingabeeinheit, zu welchem Zwecke beliebige der Tasten doppelt belegt sind. Auch der nachfolgend beschriebene Betriebsablauf ist nur einer von vielen durchführbaren Programmabläufen. Während des Betriebsablaufes legt der Programmspeicher 43 schrittweise verschiedene, zur Eingabe von Daten auffordernde Anzeigen auf die Anzeigeeinheit 4 und nimmt auch die innere Programmierung des Gerätes vor. Die eingegebenen Daten werden so entweder einem zugeordneten Speicherplatz des Speichers 20 zugeordnet oder aber über die Rechnereinheit nach vorbestimmten Programmen miteinander verknüpft.

Zur Aufnahme eines Rundholzaufmaßes wird zunächst entsprechend dem Programmablauf der Kopf einer Aufnahmeliste eingegeben, der die wesentlichen Randbedingungen, beispielsweise Käufer, Verkäufer, Lagerplatz, Datum usw. enthält. Anschließend erfolgt über die Wahltaste 28 die Eingabe der Blochnummer. Sodann werden durch Betätigung jeweils einer der Tasten für die Holzart, Holzsorte und Güteklasse spezielle Rundholzdaten eingegeben. Anschließend erfolgt über das numerische Tastenfeld 23 die Eingabe der Länge und des Durchmessers des Rundholzes. Dann erfolgt die Eingabe eines Rindenabzuges, der die Dicke der Rinde des aufzunehmenden Rundholzes berücksichtigt. Aus den Daten für den Durchmesser und den Rindenabzug erfolgt automatisch die Berechnung der Stärkeklasse des Rundholzes, zusätzlich mit den Daten für die Länge kann eine Berechnung der Kubatur erfolgen.

Zur Berechnung der Kubatur besitzt das erfindungsgemäße Gerät eine in den Figuren nicht näher bezeichnete Umschalttaste, bei deren Betätigung die Rechnereinheit wahlweise zwischen einer Festmeter- und einer Raummeterberechnung umschaltbar ist. Die Umschalttaste ist zweckmäßigerweise als Doppelfunktionstaste ausgeführt und ist identisch mit einer der Tasten des Rechenarten-Tastenfeldes 25.

Es besteht auch noch die Möglichkeit, die Nutzungsart für das aufgenommene Rundholz einzugeben.

Die eingegebenen sowie die automatisch berechneten Daten erscheinen im Fenster 8 der Anzeigeeinheit 4 nebeneinanderstehend und sind daher gut kontrollierbar. Durch Drücken einer in den Figuren nicht näher bezeichneten Speichertaste kann die pro Aufnahme eines Rundholzes erhaltene gesamte Datenmenge auf einmal in den Speicher 20 abgespeichert werden. Man erreicht also ein blockweises Abspeichern, das ein späteres Übertragen der Daten an Peripheriegeräte sehr erleichtert. Als Speichertaste ist vorzugsweise eine der Tasten des Tastenabschnittes 17 gewählt, die dann zwei Funktionen ausführen kann.

An dieser Stelle sei eingefügt, daß die zweite Funktion einer Doppelfunktionstaste vorzugsweise durch vorheriges Drücken der Taste "Sh" der Zusatztasten 27 ausgelöst werden kann. So besteht beispielsweise die Möglichkeit, mittels der als Doppelfunktionstasten ausgebildeten Rechenarten-Tasten 26 unter einer Blochnummer die Daten mehrerer Rundholzaufnahmen abzuspeichern.

Durch Drücken einer Aufmaßtaste 44 im Tastenabschnitt 17 sind die im Speicher 20 befindlichen Aufmaßdaten abrufbar und auf die Anzeigeeinheit 4 übertragbar. So ist jederzeit eine Kontrolle der eingegebenen und berechneten Daten möglich. Auch ist eine nicht näher bezeichnete Abruftaste vorgesehen, bei deren Betätigung einzelne Daten, insbesondere zu Korrekturzwecken, auf der Anzeigeeinrichtung aufleuchten.

Der Speicher 20 des erfindungsgemäßen Gerätes besitzt eine Speichergruppe 45, in der das Aufmaß eines beliebigen Rundholzstammes löschbar speicherbar ist. Weiter ist in der Eingabeeinheit 2 eine Wahltaste enthalten, bei deren Betätigung die in der Speichergruppe 45 abgespeicherten Daten auf der Anzeigeeinheit 8 erscheinen. Als Wahltaste dient die Taste "M", wird sie bei der Durchmessereingabe gedrückt, wird sie vom Gerät als Wahltaste erkannt. Durch diese vorteilhafte Ausbildung besteht die Möglichkeit, zur Eingabe eines neuen Aufmaßes die abgespeicherten Aufmaßdaten in die Anzeigeeinheit zu holen und dort nur die von den gespeicherten Daten abweichenden, neuen Daten einzugeben. Man erhält dadurch eine erhebliche Zeiteinsparung; nur die von dem sog. "Modellstamm" abweichenden Daten sind einzugeben.

Vorteilhafterweise enthält der Speicher 20 weitere nicht einzeln aufgeschlüsselte Speichergruppen 46, in denen jeweils eine Tabelle für den Rindenabzug bei bestimmten Holzarten abgespeichert ist. Durch Betätigung einer beliebigen Taste des Tastenfeldes 34 für die Holzart ist dieselbe mit der entsprechenden Speichergruppe 46 verbindbar und ermittelt automatisch nachträglich den entsprechenden Rindenabzug. Weiter besitzt der Speicher 20 Speichergruppen 47, in denen die oben genannten Holzsorten abspeicherbar sind. Unter deren Zuhilfenahme erfolgt bei Betätigung einer Holzarttaste 35 automatisch die Ermittlung der zugehörigen Holzsorte. Weiterhin kann vorgesehen werden, daß zunächst durch das Betätigen einer Holzarttaste die Speichergruppe 46 für die Rindenabzugtabelle angewählt wird und anschließend noch bei der darauffolgenden Eingabe des Stammdurchmessers die Stärkeklasse dieser Gruppe zusätzlich erfaßt wird. Man erhält dadurch automatisch den sich aus beiden Komponenten ergebenden Rindenabzug, der dann in der Berechnung der Kubatur berücksichtigt wird. Dadurch ist es möglich, eine präzise Berechnung der Kubatur durchzuführen.

Das erfindungsgemäße Gerät hat den Vorteil, daß es auch im unwegsamen Gelände und bei schlechten Witterungseinflüssen funktionssicher einsetzbar ist, da es kompakt gebaut und geschützt untergebracht ist. Vorzugsweise ist eine bei Unterschreiten einer gewissen Temperaturschwelle ansprechende, elektronisch betätigbare Heizung eingebaut, die die Elektronikbauteile so tempertiert, daß sie störungsfrei arbeiten. Das erfindungsgemäße Gerät läßt sich gut handhaben, die die Akkumulatoren enthaltende Erhebung 6 dient vorzugsweise als Haltepartie, um das Gerät gut festhalten zu können.

Um die besonderen Vorteile des erfindungsgemäßen Gerätes nochmals herauszustellen, sei insbesondere auf die hohe Arbeitsgeschwindigkeit und die Bedienungsfreundlichkeit hingewiesen. Es erübrigt sich, die Daten für die Holzart, Holzsorte und Güteklasse aufwendig in das Gerät einzugeben, es genügt jeweils ein kurzes Antippen der gewünschten Taste.

Gemäß einer nicht dargestellten Weiterbildung des erfindungsgemäßen Datenerfassungsgerätes ist vorgesehen, daß am Gerät unmittelbar eine mit einer Speichergruppe des Speichers 20 verbundene Lesevorrichtung für an Holzmarkierungsplättchen od. dgl. in einem bestimmten Code vorgesehene Bezeichnungen angebracht ist, bzw. das Gerät einen Anschluß für eine entsprechende Leseeinrichtung aufweist. Dadurch erübrigt es sich, die Blochnummer jeweils explizit einzugeben, die Lesevorrichtung erkennt die Nummer anhand des Codes.

Die für die Erstellung einer ganzen Aufnahmeliste, beispielsweise bei einem Holzeinkauf anfallenden Daten und Zwischenberechnungsergebnisse können aus dem Speicher 20 mit entsprechenden Programmen auf Peripheriegeräte ausgelesen werden. Im einfachsten Fall werden die einzelnen Rundhölzer fortlaufend numeriert, wobei die Blochnummer für jedes Rundholz mit den anderen Daten gespeichert wird. Man kann nun eine der fortlaufenden Numerierung der Rundhölzer folgende und diese Numerierung auch anführende Liste ausdrucken lassen. Dabei kann man gleich über einen Computer den Gesamtpreis der Lieferung berechnen lassen und gegebenenfalls ausdrucken. Eine andere Möglichkeit besteht darin, Listen von in einer Lieferung oder allgemein in der jeweiligen Gesamtmenge enthaltenen Rundhölzern der gleichen Holzart zu erstellen, wobei hier noch Unterteilungen nach Güte- und Dickenklassen möglich sind. Für die Erstellung der verschiedenen Aufnahmelisten ist nur eine andere Programmwahl und keine zusätzliche Schreibarbeit bzw. Bearbeitung nötig.

Die beim Einkauf ermittelten Daten der einzelnen Rundhölzer können in einem Zentralspeicher oder Zentralrechner des jeweiligen Holzplatzes od.dgl. gespeichert werden. Aufgrund der Aufnahmedaten kann eine wenigstens teilweise automatische Sortierung der Rundhölzer einer Lieferung für die Lagerung vorgenommen bzw. vorprogrammiert werden. Man kann die Daten der einzelnen Bloche bis zum Verkauf im Zentralspeicher gespeichert lassen und für die Erstellung der Verkaufslisten beim Verkauf nach den Blochkennzeichnungsnummern abrufen. Für die Lagerhaltung und den Verkauf ist also keine Neuvermessung notwendig. Bei ordnungsgemäßer Führung des Holzplatzes erhält man am Zentralspeicher bzw. -rechner jederzeit genaue Auskunft über den Lagerbestand.

Das erfindungsgemäße Gerät kann so programmiert werden, daß es auch von Hilfskräften ordnungsgemäß bedient werden kann und dabei insbesondere die Reihenfolge der Dateneingabe festgelegt wird.

Um von vorneherein falsche Eingaben des Datums bzw. der Uhrzeit zu verhindern, ist in einer Weiterbildung des Gerätes ein Zeitgeber vorgesehen, und mit dem Speicher verbindbar, so daß dort Datum und/oder Uhrzeit der jeweiligen Erfassung festgehalten werden und bei der Datenausgabe auf Drucker od dgl. abrufbar sind.

Wird das erfindungsgemäße Gerät in Verbindung mit einem elektronisch arbeitenden Dickenmeßgerät betrieben, wie oben schon erwähnt, so kann vorgesehen werden, daß entsprechend der jeweiligen Relativstellung der Meßbacken Meßdaten erzeugt werden, die zum erfindungsgemäßen Gerät vorzugsweise kontaktlos übertragen werden. Die Übertragung erfolgt unter Zuhilfenahme der Datenaufnahmeeinrichtung 14. Durch Signalwiederholung, Quersummenbildung aus den erhaltenen, einer Messung zugeordneten Meßdaten und ähnlichen Maßnahmen kann man sicherstellen, daß Übertragungsfehler nicht in die Endauswertung eingehen.

## Patentansprüche

1. Tragbares Datenerfassungsgerät, insbesondere zur Eingabe von Abmessungen und Typenbezeichnungen, mit einer Tastenfelder aufweisenden Eingabeeinheit zur Dateneingabe mit einer die eingegebenen Daten anzeigenden alphanumerischen Anzeigeeinheit mit einem Speicher zum Abspeichern von Daten, und mit einer Anschlußeinrichtung (12) an der Peripheriegeräte wie Drucker, Diskettenspeicher od.dgl. und/oder serielle und parallele Datenübertragungseinrichtungen anschließbar sind, dadurch gekennzeichnet, daß es zur Verwendung bei der Aufnahme von Rundholzaufmaßen bzw. -mengen ein erstes Tastenfeld (34) zur Eingabe von Holzarten, ein zweites Tastenfeld (36) zur Eingabe von Holzsorten und ein drittes Tastenfeld (38) zur Eingabe von Güteklassen besitzt, wobei jede einzelne Taste (35, 37, 42) der Tastenfelder (34, 36, 38) geneu einer Holzert, Holzsorte bzw. Güteklasse entspricht, daß es ein an sich bekanntes numerisches Tastenfeld (23) wenigstens zur Eingabe von Abmessungen der aufzunehmenden Rundhölzer in eine Recheneinheit zur Verarbeitung eingegebener Daten besitzt, und daß die Anzeigeeinheit (4) auch die in der Recheneinheit (3) erhaltenen Ausgabedaten wie Stärkeklasse, Kubatur od.dgl. anzeigt.

2. Tragbares Datenerfassungsgerät nach Anspruch 1, dadurch gekennzeichnet, daß es eine Datenaufnahme- (14) und/oder eine Datensendeeinrichtung enthält, die zur kontaktlosen Aufnahme bzw. Abgabe von insbesondere mittels Infrarotsignalen übertragenen Messdaten aus einem bzw. an ein elektronisches Zusatzgerät, insbesondere Meßgerät, z. B. ein elektronisches Dickenmessgerät wie Messkluppe, dient.

3. Tragbares Datenerfassungsgerät nach Anspruch 1 oder 2, dadurch gekennzeichnet, daß es ein Buchstaben-Tastenfeld (30) zur Eingabe von insbesondere mit den vier anderen Tastenfeldern nicht erfassbaren Daten besitzt.

4. Tragbares Datenerfassungsgerät nach einem der Ansprüche 1 bis 3, gekennzeichnet durch eine zur Eingabe einer Blochnummer betätigbare Wahltaste (28).

5. Tragbares Datenerfassungsgerät nach einem der Ansprüche 1 bis 4, gekennzeichnet durch, eine Speichertaste, die zum Abspeichern der pro Aufnahme eines Rundholzes erhaltenen gesamten Datenmenge in den Speicher (20) betätigbar ist.

6. Tragbares Datenerfassungsgerät nach einem der Ansprüche 1 bis 5, dadurch gekennzeichnet, daß es ein Additions-, Subtraktions-, Multiplikations-Divisionstasten und gegebenenfalls weitere Rechenartentasten (26) besitzendes Tastenfeld (25) aufweist, derart, daß es auch als handelsübliches Rechengerät einsetzbar ist.

7. Datenerfassungsgerät nach einem der Ansprüche 1 bis 6, dadurch gekennzeichnet, daß es vor störenden Umwelteinflüssen geschützt untergebracht ist, wobei es insbesondere in einem spritzwasserdichten Gehäuse (1) eingebaut ist, in das zweckmäßigerweise eine bei Unterschreiten einer gewissen Temperaturschwelle ansprechende, elektronisch betätigbare Heizung eingebaut ist.

8. Tragbares Datenerfassungsgerät nach einem der Ansprüche 1 bis 7, gekennzeichnet durch mindestens eine Abruftaste, bei deren Betätigung einzelne Daten, insbesondere zu Korrekturzwecken, auf der Anzeigeeinheit (4) aufleuchten.

9. Tragbares Datenerfassungsgerät nach einem der Ansprüche 1 bis 8, gekennzeichnet durch eine Umschalttaste, bei deren Betätigung die Rechnereinheit (3) wahlweise zwischen einer Festmeter- und einer Raummeterberechnung umschaltbar ist.

10. Tragbares Datenerfassungsgerät nach einem der Ansprüche 1 bis 9, gekennzeichnet durch eine die Aufmaßdaten eines bestimmten Rundholzstammes löschbar speichernde Speichergruppe (45) und durch eine bei ihrer Betätigung diese abgespeicherten Daten beliebig oft auf der Anzeigeeinheit (4) erscheinen lassende Wahltaste, wobei zur Eingabe eines neuen Aufmaßes nur die von den gespeicherten Abmaßdaten abweichenden Daten einzugeben sind.

11. Tragbares Datenerfassungsgerät nach Anspruch 6, dadurch gekennzeichnet, daß insbesondere die Tasten (26) des Rechenarten-Tastenfelds (25) Doppelfunktionstasen sind, wobei die jeweils zweite Funktion einer Taste durch eine Farbkennung ersichtlich ist.

12. Tragbares Datenerfassungsgerät nach einem der Ansprüche 1 bis 11, gekennzeichnet durch mindestens eine Aufmaßtaste (44), bei deren Betätigung im Speicher (20) befindliche Aufmaßdaten abrufbar und insbesondere auf die Anzeigeeinheit übertragbar sind.

13. Tragbares Datenerfassungsgerät nach einem der Ansprüche 1 bis 12, dadurch gekennzeichnet, daß in einzelnen Speichergruppen (46) des Speichers (20) jeweils eine Tabelle für den Rindenabzug bei bestimmten Holzarten abgespeichert ist, daß jede Taste (35) des Tastenfeldes (34) für die Holzart bei der Betätigung mit der zugehörigen Speichergruppe (46) verbindbar ist und den Rindenabzug ermittelt und daß Speichergruppen (47) vorhanden sind, in denen die Holzsorten abspeicherbar sind, wobei bei Betätigung einer Holzartentaste (35) automatisch die Ermittlung der zugehörigen Holzsorte erfolgt.

14. Tragbares Datenerfassungsgerät nach Anspruch 13, dadurch gekennzeichnet, daß durch eine sich an das Betätigen einer Holzarten-Taste (35) anschließende Durchmessereingabe die der Speichergruppe (46) für die Rindenabzugstabelle entsprechende Stärkeklasse ermittelt wird, wobei der sich aus beiden Komponenten ergebende Rindenabzug automatisch erfasst und in der Berechnung der Kubatur berücksichtigt wird.

15. Tragbares Datenerfassungsgerät nach einem der Ansprüche 1 bis 14, dadurch gekennzeichnet, daß es ein plattenförmiges, quadratisches oder rechteckiges Gehäuse (1) besitzt, auf dessen einer Plattenoberfläche (5) die Anzeigeeinheit (4), die Eingabeeinheit (2) und eine eine elektrische Versorgungseinheit aufnehmende Erhebung (6) angeordnet sind, wobei die Anzeigeeinheit (4) die Gestalt eines langgestreckten Rechteckes besitzt, das parallel zu einer der Längsseiten des Gehäuses verlaufend angeordnet ist und wobei die Erhebung (6) in etwa im rechten Winkel zur Anzeigeeinheit (4) verlaufend im Bereich einer der Plattenseiten angeordnet ist, und daß die Anzeigeeinheit (4) und die Anschlußeinheit (12) an den Plattenselten des Gehäuses (1) vorgesehen sind.

## Claims

1. A portable data logging unit particular for the entry or dimensions and type designations, with an input unit with a keyboard for data entry, with an alphanumeric display unit for the display of the entered data, with a memory for data storage and with a connecting unit (12) for the connection of peripherals such as printers, floppy disk storage and/or serial or parallel data communication equipment, characterised in that it comprises, for recording round stock dimensions and quantities, a first key group (34) for the entry of timber species, a second key group (36) for the entry of timber types and a third key group (38) for the entry of quality grades, each key (53, 37, 42) of each key group (34, 36, 38) being allocated to an individual species, type or grade, in that it has a numeric key group (23) of a known design for the input of at least the dimensions of the round stock to be recorded into a computer for the processing of the entered data, and in that the display unit (4) also displays the output data of the computer (3), such as diameter classification, cubage and the like.

2. A portable data logging unit according to Claim 1, characterised by a data acquisition unit (14) and/or a data transmission unit for the contact-free recording/transmission of data transmitted, in particular, by infrared signals from/to an auxiliary electronic unit, for instance an electronic thickness meter such as calipers.

3. A portable data logging unit according to Claim 1 or 2, characterised by an alphabetic key group (30) for the input of data which cannot be entered with the other four key groups.

4. A portable data logging unit according to any of Claims 1 to 3, characterised by a selector key (28) which can be operated for the input of a stump number.

5. A portable data logging unit according to any of Claims 1 to 4, characterised by a memory key for storing all the data obtained in measuring a piece of round stock in the memory (20).

6. A portable data logging unit according to any of Claims 1 to 5, characterised by a key group (25) containing addition, subtraction, multiplication, division and possibly other arithmetical operations keys (26), enabling the unit to be used as a conventional calculator.

7. A portable data logging unit according to any of Claims 1 to 6, characterised by protection against detrimental environmental conditions, being in particular accommodated in a splash-proof housing (1) suitably incorporating an electronically triggered heater which is actuated by temperatures below a preset threshold value.

8. A portable data logging unit according to any of Claims 1 to 7, characterised by at least one recall key which when pressed causes individual data to be displayed on the display unit (4), in particular for corrections.

9. A portable data losing unit according to any of Claims 1 to 8, characterised by a changeover key which when pressed causes the computer unit (3) to select either solid measure or stacked cubic metre calculation.

10. A portable data logging unit according to any of Claims 1 to 9, characterised by a memory module (45) for the erasable storage of the dimensions of a specific piece of round stock and by a selector key which when pressed causes the stored data to be displayed on the display unit (4) whenever desired, so that only data deviating from the stored dimensions have to be entered for input of a new set of dimensions.

11. A portable data logging unit according to Claim 6, characterised in that the keys (26) in particular of the arithmetical operations key group (25) are twin-function keys, the secondary function being identified by col our coding.

12. A portable data logging unit according to any of Claims 1 to 11, characterised by at least one dimensions key (44) which when pressed causes the dimensional data stored in the memory (2) to be recalled and in particular to be transferred to the display unit.

13. A portable data logging unit according to any of Claims 1 to 12, characterised in that in each of the memory modules (46) of the memory (20) a bark allowance table for specific timber species is stored, in that each key (35) of the species key group (34) can when pressed be linked to the associated memory module (46) to determine bark allowance, and in that memory modules (47) are provided for the storage of timber types, operation of a species key (35) automatically resulting in the determination of the associated timber type.

14. A portable data logging unit according to Claim 13, characterised in that the input of a diameter following operation of a species key (35) causes the diameter class corresponding to the memory module (46) for the bark allowance table to be determined, the bark allowance resulting from the two components being automatically determined and taken into account in cubage calculation.

15. A portable data logging unit according to any of Claims 1 to 14, characterised by a flat square or rectangular housing (1) on the top face (5) of which are located the display unit (4), the input unit (2) and a raised part (6) housing the power supply unit, the display unit (4) having the shape of an oblong rectangle extending parallel to one of the lengths of the housing and the raised part (6) lying at an approximately right angle to the display unit (4) near one of the sides of the housing, and by the display unit (4) and the connection unit (12) being located on the flat sides of the housing (1).

**Revendications**

1. Appareil portatif pour l'acquisition de données, en particulier pour la saisie de dimensions et de désignations de catégories, comprenant une unité d'entrée conportant des ensembles de touches pour la saisie des données, une unité d'affichage alphanumérique affichant les données saisies, avec une mémoire pour l'enregistrement de données, et avec un dispositif de raccordement (12) auquel peuvent être raccordés des appareils périphériques comme des imprimantes, des disquettes de mémoire, ou similaires, et/ou des dispositifs de transmission de données en série ou en parallèle, caractérisé par le fait que, pour son utilisation pour la saisie de dimensions ou de quantités de bois ronds, il comporte un premier ensemble de touches (34) pour la saisie d'essences de bois, un deuxième ensemble de touches (36) pour la saisie de catégories de bois et un troisième ensemble de touches (36) pour la saisie de classes de qualité, chaque touche individuelle (35, 37, 42) des ensembles de touches (34, 36, 36) correspondant exactement à une essence de bois, à une catégorie de bois ou à une classe de qualité, respectivement, qu'il comporte un ensemble de touches numériques (23) connu en soi, au moins pour la saisie de dimensions des bois ronds à entrer dans une unité de calcul pour le traitement des données saisies, et que l'unité d'affichage (4) affiche également les données d'entrée contenues dans l'unité de calcul (3) comme la classe de diamétre, le stérage ou similaires.

2. Appareil portatif pour l'acquisition de données selon la revendication 1, caractérisé par le fait qu'il comprend un dispositif de réception de données (14) et/ou un dispositif d'émission de données qui sert à recevoir ou, respectivement, à émettre sans contact des données de mesure, transmises en particulier au moyen de signaux infrarouges, depuis un appareil électronique supplémentaire, ou vers un tel appareil, respectivement, en particulier depuis ou vers un appareil de mesure, par exemple un appareil électronique de mesure d'épaisseur comme un compas d'épaisseur.

3. Appareil portatif pour l'acquisition de données selon la revendication 1 ou 2, caractérisé par le fait qu'il comporte un ensemble de touches à lettres (30) pour la saisie, en particulier, de données ne pouvant pas être acquises avec les quatre autres ensembles de touches.

4. Appareil portatif pour l'acquisition de données selon l'une des revendications 1 à 3, caractérisé par une touche de sélection (20) pouvant être actionnée pour la saisie d'un numéro de tronc.

5. Appareil portatif pour l'acquisition de données selon l'une des revendications 1 à 4, caractérisé par une touche de mémoire qui peut être actionnée pour enregistrer dans la mémoire (20) l'ensemble des données acquises pour chaque réception d'un bois rond.

6. Appareil portatif pour l'acquisition de données selon l'une des revendications 1 à 5, caractérisé par le fait qu'il présente un ensemble de touches (25) comportant des touches d'addition, de soustraction, de multiplication, de division, et, le cas échéant, d'autres touches de type de calcul (26), de sorte qu'il peut également être utilisé comme un calculateur commercial habituel.

7. Appareil portatif pour l'acquisition de données selon l'une des revendications 1 à 6, caractérisé par le fait qu'il est mis à l'abri et protégé des influences perturbatrices de l'environnement, en étant en particulier monté dans un boîtier (1) étanche aux projections d'eau dans lequel est avantageusement monté un chauffage à mise en marche électronique répondant au dépasse ment vers le bas d'un certain seuil de température.

8. Appareil portatif pour l'acquisition de données selon l'une des revendications 1 à 7, caractérisé par au moins une touche d'appel lors de l'actionnement de laquelle des données individuel les s'allument sur l'unité d'affichage (4), en particulier à des fins de correction.

9. Appareil portatif pour l'acquisition de données selon l'une des revendications 1 à 8, caractérisé par une touche de commutation lors de l'actionnement de laquelle l'unité de calcul (3) peut être commutée à volonté entre un calcul de volume réel et un calcul de volume apparent.

10. Appareil portatif pour l'acquisition de données selon l'une des revendications 1 à 9, caractérisé par un groupe de mémoire (45) enregistrant de manière effaçable les données dimensionnelles d'un tronc de bois rond déterminé, et par une touche de sélection dont l'actionnement fait apparaître ces données enregistrées sur l'unité d'affichage (4) aussi souvent qu'on le souhaite, seules les données s'écartant des données dimensionnelles enregistrées devant être saisies pour l'entrée d'une nouvelle dimension.

11. Appareil portatif pour l'acquisition de données selon la revendication 6, caractérisé par le fait qu'en particulier les touches (26) de l'ensemble des touches de types de calcul (25) sont des touches à double fonction, la seconde fonction de chaque touche étant rendue visible par un repère coloré.

12. Appareil portatif pour l'acquisition de données selon l'une des revendications 1 à 11, caractérisé par au moins une touche de dimensions (44) lors de l'actionnement de laquelle les données dimensionnelles qui se trouvent dans la mémoire (20) peuvent être appelées et transmises en particulier à l'unité d'affichage.

13. Appareil portatif pour l'acquisition de données selon l'une des revendications 1 à 12, caractérisé par le fait que dans chacun des divers groupes de mémoire (46) de la mémoire (20) est enregistré un tableau pour la déduction de l'écorce pour des essences de bois déterminées, que chaque touche (35) de l'ensemble de touches (34) pour l'essence de bois peut être reliée lors de son actionnement au groupe de mémoire (46) associé et fournit l'écorce à déduire, et qu'il existe des groupes de mémoire (47) dans lesquels les catégories de bois peuvent être enregistrées, la détermination de la catégorie de bois correspondante s'ensuivant automatiquement lors de l'actionnement d'une touche d'essence de bois (35).

14. Appareil portatif pour l'acquisition de données selon la revendication 13, caractérisé par le fait qu'au moyen d'une saisie de diamètre consécutive à l'actionnement d'une touche d'essence de bois (35), on détermine la classe dimensionnelle correspondant au groupe de mémoire (46) destiné au tableau pour la déduction de l'écorce, la déduction à faire pour l'écorce qui résulte des deux composantes étant acquise automatiquement et prise en compte dans le calcul du stérage.

15. Appareil portatif pour l'acquisition de données selon l'une des revendications 1 à 14, caractérisé par le fait qu'il comporte un boîtier (1) en forme de plaque carrée ou rectangulaire sur l'une des faces de plaque (5) duquel sont montées l'unité d'affichage (4), l'unité de saisie (2) et une partie en hauteur (6) recevant une unité d'alimentation électrique, l'unité d'affichage (4) présentant la forme d'un rectangle allongé qui est monté en s'étendant parallèlement à l'un des grands côtés du boîtier, et la partie en hauteur (6) étant montée dans la région de l'un des côtés de la plaque en s'étendant sensiblement à angle droit par rapport à l'unité d'affichage (4), et que l'unité d'affichage (4) et l'unité de raccordement (12) sont prévues sur les côtés de la plaque du boîtier (1).

Fig. 1

0 204 008

0 204 008

16

8

31

30

32

33  19  35  18 34 36  37  38  42  29  17  27

23  24  25  26  28  44

| A | B | C | D | | Fi | Sw | F | | 7 | 8 | 9 |
| E | F | G | H | | Ta | Ma | S | | 4 | 5 | 6 |
| I | J | K | L | | Ki | S1 | A | | 1 | 2 | 3 |
| M | N | O | P | | La | S2 | B | | 0 | . | + |
| Q | R | S | T | | Bu | Gr | C | | ÷ | × | − |
| U | V | W | X | | Ei | St | X | | ↑ | ↓ | Bloch |
| Y | Z | , | : | | Es | Br | Y | | ← | → | Auf- mök |
| ( | ) | % | ○ | | Ah | Bh | M | | Inp | Del | Sh |

Fig. 2

Fig. 3